# EUROPEAN PATENT APPLICATION

(11) **EP 1 992 800 A1**
(43) Date of publication of application: **19.11.2008**
(21) Application number: 08156211.8
(22) Date of filing: 14.05.2008
(51) Int. Cl.: F01N 9/00, F01N 11/00, B01D 46/44

(54) **Integrated DPF loading and failure sensor**

(30) Priority: 16.05.2007 US 804236
(71) Applicant: Honeywell International Inc., Morristown NJ 07960 (US)
(72) Inventor: Krafthefer, Brian C., Stillwater MN 55082 (US); Rhodes, Michael L., Richfield MN 55423 (US); Postage, Bradley R., Findlay OH 45840 (US)
(74) Representative: Buckley, Guy Julian

(57) **Abstract**

An integrated DPF loading and failure sensor with two particulate matter sensors (140,150) one located upstream of the filter and the other located downstream of the filter. The sensors (140,150) are integrated into the leading and trailing edges of the filter. Integrating two particulate matter sensors with the DPF will allow the proper interval between reconditioning of DPF, since the particulate matter collected on the filter is measured and not estimated. The upstream sensor (140) determines the amount of particulate matter entering the filter (145). In addition to using the first sensor (140) for loading, the second sensor (150), at the trailing face of the filter (145), can be used to determine break-through of the DPF. The second sensor (150) measures the particulate matter escaping the filter.

## Description

### TECHNICAL FIELD

Embodiments are generally related to diesel particulate filter (DPF) system. Embodiments are also related to the field of measuring the amount of particulate matter entering and escaping DPF. Embodiments are additionally related to integrated DPF loading and failure sensor.

### BACKGROUND OF THE INVENTION

Exhaust gas from combustion engines such as a gasoline engine or a diesel engine contains particulate matter (PM) mainly composed of carbon, soot, soluble organic fraction (SOF), and the like, all of which cause air pollution. In an exhaust purifying apparatus a particulate filter is arranged in the exhaust manifold of the diesel engine to collect PM contained in the exhaust gas. For example, a diesel particulate filter (DPF) or a diesel particulate-NOx reduction system (DPNR) catalyst is used as the particulate filter.

When a particulate filter is used to collect the PM and if the amount of deposit of the collected PM is increased, the particulate filter can become clogged. If clogging of the filter takes place, increase in pressure loss of the exhaust passing through the particulate filter as well as corresponding increase in exhaust back pressure of the engine can take place, which results in lower engine output and lower fuel efficiency.

In other prior art temperature of the exhaust is raised at a time point when the amount of PM collected by (deposited on) the particulate filter reaches a certain level, so that the PM on the particulate filter is burnt and removed to recondition the particulate filter.

In still other art an internal combustion engine exhaust gas purifying system is provided which is capable of preventing an internal combustion engine continuous regenerating DPF system from deteriorating by restricting the maximum fuel injection quantity of the internal combustion engine and avoiding a great increase in exhaust gas quantity when the quantity of deposited-PM exceeds a predetermined value in the continuous regenerating DPF system.

Estimation of the amount of a particulate matter deposit in a diesel particulate filter provided in an exhaust passage of a vehicle diesel engine has been disclosed. When a vehicle's speed exceeds a predetermined vehicle speed, a differential pressure method, in which the particulate matter deposit amount is estimated based on the differential pressure upstream and downstream of the filter, is applied. When the vehicle's speed does not exceed the predetermined vehicle speed, an accumulation method, in which the particulate matter deposit amount is estimated by accumulating an increment determined from the load and rotation speed of the diesel engine, is applied. When switching from the differential pressure method to the accumulation method, the particulate matter deposit amount determined in the differential pressure method is used as an initial value of the accumulation, and thus the particulate matter deposit amount can be determined accurately.

The prior art methods for determining the loading of diesel particulate filter (DPF) consist of determining particle concentrations from the performance of the engine and then estimating the integrated particle mass over time. Once the estimated integrated concentration is reached, conditioning of the DPF is performed to burn off the collected diesel soot. The estimate of the particle mass collected has errors based on the engine performance and age. The method of removing collected particulate matter from the Diesel particulate filter (DPF) relies on the estimated amount of particulate matter from the engine. The estimate is made by determining the operating time of the engine and estimating the conditions that the engine operated over. The estimates can either cause reconditioning of the filter more than is necessary or allow too much particulate material to collect on the filter between reconditioning times.

There is a need to measure the level of soot loading in diesel particulate filters (DPF) for determining the time to perform a filter regeneration cycle in which soot is removed from the filter when it has become too clogged. There is also a need to determine if the filter is incapable of performing adequately such that regeneration may not be successfully performed due to a failure (breakdown, burn-through, etc.) of the substrate.

### BRIEF SUMMARY

The following summary is provided to facilitate an understanding of some of the innovative features unique to the embodiments disclosed and is not intended to be a full description. A full appreciation of the various aspects of the embodiments can be gained by taking the entire specification, claims, drawings, and abstract as a whole.

It is, therefore, one aspect of the present invention to provide for an improved DPF system.

It is another aspect of the present invention to measure amount of particulate matter entering and escaping DPF.

It is a further aspect of the present invention to provide for an integrated DPF loading and failure sensor.

The aforementioned aspects and other objectives and advantages can now be achieved as described herein. The DPF system has two particulate matter sensors, one located upstream of the filter and the other located downstream of the filter. These sensors are integrated into the leading and trailing edges of the filter. Integrating two particulate matter sensors with the DPF will allow the proper interval between reconditioning since the particulate matter collected on the filter is measured and not estimated. The upstream sensor determines the amount of particulate matter entering the filter. In addition to using the first sensor for loading, the second sensor, at the trailing face of the filter, can be used to determine break-through of the DPF. The second sensor measures the particulate matter escaping the filter.

The sensor is made up of metal mesh electrodes that are adhered to the upstream and downstream surfaces of the DPF. The electrode configuration of the upstream electrode improves the detection capability of loading of the DPF unit and the timing of the reconditioning of the DPF unit. The increased area of the downstream electrode improves the capability of sensing small particulate amounts that may exit the DPF from a failed unit.

### BRIEF DESCRIPTION OF THE DRAWINGS

The accompanying figures, in which like reference numerals refer to identical or functionally-similar elements throughout the separate views and which are incorporated in and form a part of the specification, further illustrate the embodiments and, together with the detailed description, serve to explain the embodiments disclosed herein.

FIG. 1 illustrates a schematic diagram of DPF system, which can be implemented in accordance with a preferred embodiment;

FIG. 2 illustrates a perspective view of a DPF, which can be implemented in accordance with an alternative embodiment; and

FIG. 3 illustrates a high level flow chart of operations depicting logical operational steps for measuring amount of particulate matter entering and escaping the DPF, in accordance with an alternative embodiment.

### DETAILED DESCRIPTION

The particular values and configurations discussed in these non-limiting examples can be varied and are cited merely to illustrate at least one embodiment and are not intended to limit the scope thereof.

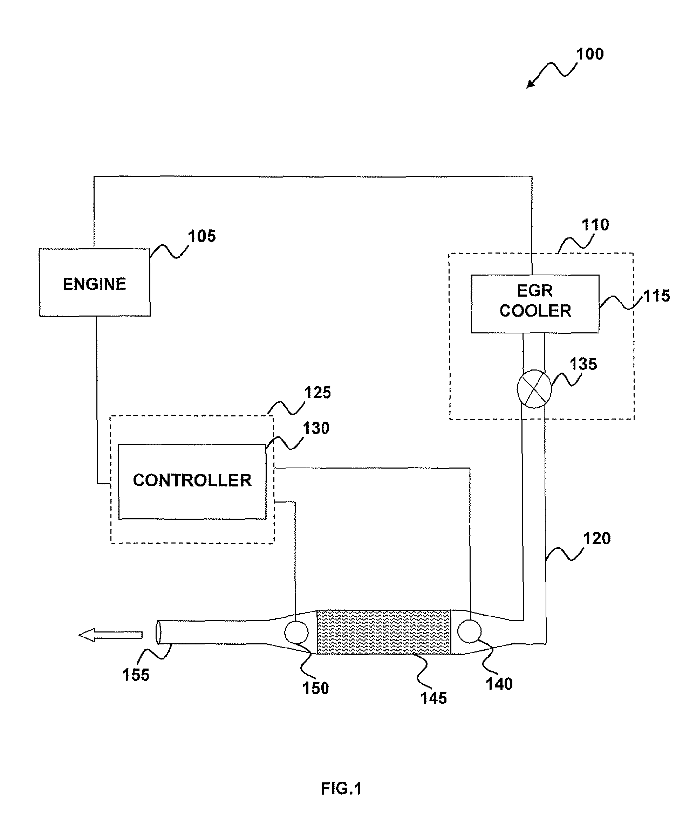

FIG. 1 illustrates a schematic diagram of DPF system 100, which can be implemented in accordance with a preferred embodiment. The system 100 has an engine 105 connected to a portion of an exhaust system 120 having a diesel particulate filter (DPF) 145. The PM sensors 140 and 150 are arranged on either side of the filter 145 for measuring amount of PF entering and escaping DPF 145 respectively. A signal electronics package 125 has a controller 130 for controlling and managing the overall operation of the system 100. The signal electronics package 125 is electrically connected to the sensors 140 and 150, engine 105 and any other sensors or systems that may provide relevant information for determining the filter state. The EGR system 110 has an EGR valve 135 and an EGR cooler 115 for recirculating the exhaust gas from engine 105. The valve 135 regulates the amount of exhaust gas that is introduced back into the engine. The cooler 115 cools the exhaust gas to a specified temperature which condenses the unburned fuel.

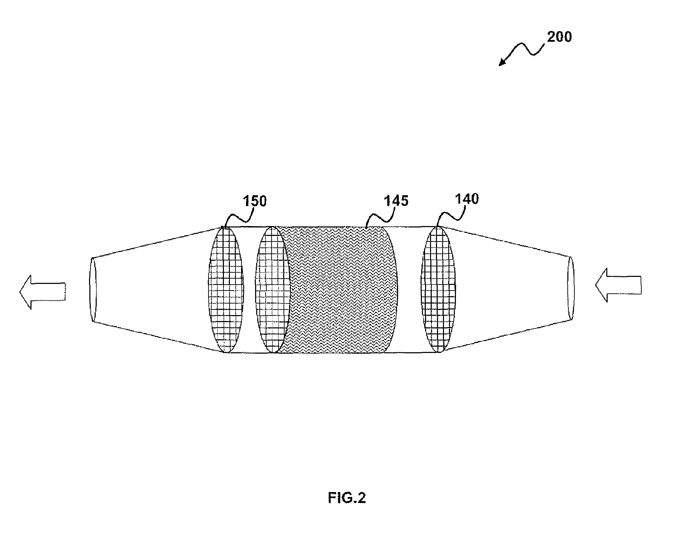

FIG. 2 illustrates a perspective view 200 of a DPF 145 depicted in FIG. 1, which can be implemented in accordance with an alternative embodiment. The DPF 145 has particulate matter sensors 140 and 150, located upstream and located downstream of the filter 145 respectively. The sensors 140 and 150 are integrated into the leading and trailing edges of the filter 145. Integrating particulate matter sensors 140 and 150 with the DPF 145 will allow the proper interval between reconditioning since the particulate matter collected on the filter 145 is measured and not estimated. The sensor 140 determines the amount of particulate matter entering the filter 145. In addition to using the sensor 140 for loading, the sensor 150, at the trailing face of the filter 145, can be used to determine break-through of the DPF 145. The sensor 150 measures the particulate matter escaping the filter 145.

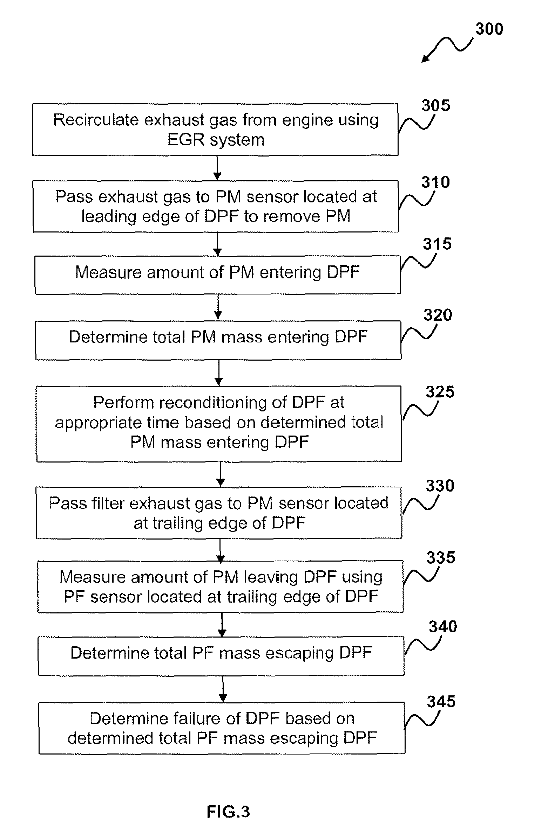

FIG. 3 illustrates a high level flow chart 300 of operations depicting logical operational steps for measuring amount of particulate matter entering and escaping DPF 145, in accordance with an alternative embodiment. As said at block 305, the exhaust gas from engine 105 can be recirculated using EGR system 110. As depicted at block 310, the exhaust gas can be passed to PM sensor 140 located at the leading edge of DPF 145 to remove PM. The amount of PM entering PDF 145 can be measured as indicated at block 315.

As described at block 320, the total PM mass entering DPF 145 can be calculated by integrating amount of PM entering DPF 145 over an operating time of DPF 145. As said at block 325, reconditioning of DPF 145 at appropriate time can be performed based on determined total PM mass entering PDF. The exhaust gas can then be passed to PM sensor 150 located at the trailing edge of DPF 145 as described at block 330. As said at block 335, the amount of PM leaving DPF 145 can be measured using PF sensor 150 located at the trailing edge of DPF 145. The total PF mass escaping DPF 145 can be determined by integrating amount of PM entering DPF 145 over an operating time of DPF 145 as indicated at block 340. Finally as said at block 245, the failure of DPF 145 can be determined based on determined total PF mass escaping PDF.

It will be appreciated that variations of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. An integrated DPF loading and failure sensor system, comprising:
an exhaust system for transporting an exhaust emission from an engine;
a diesel particulate filter (DPF) disposed in said exhaust system;
an engine gas recirculation (EGR) system for recirculating a portion of an said exhaust back to said engine;
a first sensor for measuring particulate matter entering said DPF wherein said first sensor can be located at upstream side of said DPF; and
a second sensor for measuring particulate matter escaping said DPF wherein said second sensor can be located at downstream side of said DPF.

2. The system of claim 1 wherein said first and second sensors are integrated into leading and trailing edges of said DPF respectively.

3. The system of claim 1 wherein said first and second sensors comprises a plurality of metal mesh electrodes.

4. The system of claim 3 wherein said first and second sensors are integrated into leading and trailing edges of said DPF respectively.

5. The system of claim 1 wherein said first sensor is used for at least one of: detecting loading of the DPF unit, detecting failure of the DPF unit, and timing of reconditioning of the DPF unit.

6. The system of claim 1 wherein said second sensor can be used for detecting failure of the DPF unit.

7. The system of claim 1 wherein said first and second sensors are integrated into leading and trailing edges of said DPF respectively and said first and second sensors comprises a plurality of metal mesh electrodes.

8. An integrated DPF loading and failure sensor system, comprising:
an exhaust system for transporting an exhaust emission from an engine;
a diesel particulate filter (DPF) disposed in said exhaust system;
an engine gas recirculation (EGR) system for recirculating a portion of an said exhaust back to said engine;
a first sensor integrated into leading and trailing edges of said DPF for measuring particulate matter entering said DPF wherein said first sensor can be located at upstream side of said DPF; and
a second sensor integrated into leading and trailing edges of said DPF for measuring particulate matter escaping said DPF wherein said second sensor can be located at downstream side of said DPF.

9. A method for measuring amount of particulate matter entering and escaping a DPF comprising:
recirculating exhaust gas from an engine using an EGR system;
passing exhaust gas to a first sensor located at leading edge of said DPF to remove PM;
measuring a amount of PM entering said DPF;
determining a total PM mass entering said DPF by integrating said amount of PM entering said DPF over an operating time of said DPF ;
performing reconditioning and loading of said DPF based on said total PM mass;
passing exhaust gas to a second sensor located at trailing edge of said DPF; and
measuring another amount of PM escaping said DPF using said second sensor.

10. The method of claim 9 further comprising:
determining another total PF mass escaping said DPF by integrating said another amount of PM escaping said DPF over an operating time of said DPF; and
determining failure of DPF based on said second total PF mass.
